# FASCICULE DE BREVET EUROPEEN

(11) **EP 2 516 782 B1**
(45) Date de publication et mention de la délivrance du brevet: **21.11.2018**
(21) Numéro de dépôt: 10796382.9
(22) Date de dépôt: 20.12.2010
(51) Int. Cl.: E06B 3/54, B32B 17/10

(54) **SYSTÈME DE FIXATION, ISOLANT, D'UN VITRAGE SUR UNE STRUCTURE PORTEUSE**
ISOLIERSYSTEM ZUR BEFESTIGUNG VON VERGLASUNGEN AN EINER TRÄGERSTRUKTUR
INSULATING SYSTEM FOR ATTACHING GLAZING TO A BEARING STRUCTURE

(30) Priorité: 23.12.2009 BE 200900811
(43) Date de publication de la demande: 31.10.2012
(73) Titulaire: AGC Glass Europe, 1348 Louvain-la-Neuve (BE)
(72) Inventeur: CUMPELIK, Pavel, B-6040 Jumet (BE); DANNEELS, Sophie, B-6040 Jumet (BE)
(74) Mandataire: Bayot, Daisy
(86) Numéro de dépôt international: PCT/EP2010/070208
(87) Numéro de publication internationale: WO 2011/076719

(56) Documents cités:
- EP-A1- 0 617 190
- EP-A1- 0 617 190
- WO-A1-02/057558
- DE-A1- 4 202 612
- DE-A1- 19 647 607
- DE-C1- 19 858 527
- DE-U1- 9 318 862
- DE-U1- 9 318 862

## Description

La présente invention concerne un système de fixation d'un vitrage, ayant des capacités d'isolation thermique, à une structure porteuse.

Il est connu que les vitrages de type V.E.A (Vitrage Extérieur Accrochés) ou, en anglais, « Point Fitted Glazing », sont fixés sur une structure porteuse par l'intermédiaire de systèmes de fixation habituellement situés près de leurs coins respectifs et/ou dans la zone périphérique du virage.
Ce genre de vitrage, où les éléments vitrés individuels de forme carrée ou rectangulaire sont juxtaposés, est connu et constitue avantageusement la façade vitrée de bâtiments. Hormis la recherche de l'esthétisme, il devient de plus en plus important que de tels vitrages présentent des performances améliorées en termes d'isolation acoustique et/ou thermique en particulier par recouvrement d'une des faces de l'élément vitré d'une ou de plusieurs couches prévues à cet effet et/ou par la confection de vitrages multiples du type doubles-vitrages, voire triples-vitrages.

Cependant, la réalisation de telles façades en vitrages multiples, exige la prise en compte des problèmes et contraintes mécaniques liés en particulier au poids du vitrage. Egalement, ces contraintes peuvent résulter des conditions atmosphériques, telles qu'une prise au vent ou liées aux variations climatiques (température), générant des contraintes de flexion ou de dilatations thermiques ou bien encore, dans le cas de vitrages multiples, des forces de cisaillement excessive notamment du fait du report du poids d'un élément vitré sur celui qui se trouve fixé à la structure porteuse. Des problèmes similaires se produisent lorsque le vitrage constitue des verrières ou des toitures.

Toutes ces différentes contraintes ont poussé les manufacturiers de l'Industrie Verrière, dans son acception la plus large, à constamment adapter et à améliorer les systèmes de fixation, à savoir vitrage multiple/structure porteuse, de façon à ce que ces systèmes garantissent une fixation transversale du vitrage et lui permette de répondre à diverses sollicitations mécaniques et thermiques sans se rompre.

Dans les cas des vitrages V.E.A. ci-dessus, la demande EP 0 192 472 décrit des fixations pour double-vitrage permettant par vissage, à l'aide d'une vis fraisée, de serrer l'une ou l'autre des plaques vitrées sur la structure porteuse.

Les documents EP 0 506 522 A, EP 0 655 543 A et EP 0 870 893 décrivent un système de fixation qui permet l'accrochage efficace de l'élément vitré par rapport à la structure porteuse par l'intermédiaire d'une tige, tout en lui assurant une capacité à fléchir de manière durable et contrôlée.

Certains systèmes de fixation, notamment celles décrites dans le brevet EP 0 617 190 B1, comportent des liaisons à rotules articulées métalliques, ou tiges rigides, qui permettent à un double-vitrage de basculer selon un mouvement sphérique. Ceci en garantit la flexibilité mais nécessite que la rotule articulée soit fabriquée avec une grande précision. Malgré cette exigence, un système de fixation à rotule présente l'avantage d'une grande facilité d'absorption des jeux de montage ou des déformations de façade du fait des contraintes mécaniques et thermiques. Typiquement, la liaison à rotule du système de fixation est insérée dans des orifices taraudés des éléments vitrés ayant des formes adaptées, telles que cylindriques et partiellement coniques. La tige rigide métallique peut être recouverte d'une rondelle constituée d'un matériau lui conférant une dureté plus faible que celle du métal afin d'éviter un contact verre/métal susceptible d'engendrer des contraintes indésirables.

L'isolation thermique recherchée, mentionnée plus haut, est usuellement déterminée par les performances globales d'une façade vitrée en vitrage multiple, définies par le coefficient d'échange thermique de celle-ci (Uw) dont les valeurs sont classiquement comprises entre 1,6 et 2 W/m².K (EN 674). On observe que plusieurs facteurs influent sur ce coefficient notamment dans le cas des vitrages V.E.A. Ce sont les ponts thermiques liés au verre en tant que tel, les points de fixation du vitrage sur la structure porteuse ou de deux éléments vitrés d'un double-vitrage, les joints répartis sur toute la surface de la façade vitrée permettant la séparation de chaque élément vitré et, enfin, les joints de liaison périphériques entre chaque élément vitré d'un vitrage multiple communément appelés espaceurs. On peut par ailleurs observer une condensation indésirable sur la surface interne des vitrages V.E.A, en particulier dans la zone voisine des points de fixation et/ou des espaceurs ainsi que sur les tiges et pièces de fixations métalliques elles-mêmes, lorsque la température extérieure est basse, par exemple inférieure à -5°C.

Les nouvelles réglementations et politiques en matière d'économie d'énergie requièrent la fabrication de vitrages dont les performances d'isolation thermique sont sans cesse améliorées. Dans ce but, il convient de réduire ce coefficient global Uw à des valeurs typiquement d'au plus 1,4 Wjm².K (EN 674). Ceci est possible par exemple en mettant en oeuvre un triple-vitrage, en modifiant la constitution du gaz dans un vitrage multiple et celles des plots de fixation et joints divers des vitrages.
Toutefois, ces solutions ne sont pas entièrement satisfaisantes, en particulier en termes de coûts de mise en oeuvre et du fait que des condensations indésirables ne sont pas évitées dans des conditions climatiques tempérées d'utilisation, avec des taux d'humidité relative, à l'intérieur de bâtiments, par exemple comprises entre 30 et 60% et lorsque la température extérieure est d'environ -5°C et celle à l'intérieur des bâtiments est typiquement comprise entre 15°C et 25°C.

Le document DE 93 18 862 U1 indique que certaines parties d'un dispositif de fixation d'un vitrage peuvent être en polymère, en outre renforcé de fibres, afin d'en réduire les ponts thermiques. Toutefois, ce document ne mentionne pas les matériaux appropriés à la réduction des ponts thermiques et ceux requis pour pouvoir maintenir des éléments vitrés d'une façade de bâtiment.

Le but de la présente invention est de pallier à au moins l'un des inconvénients cités et vise, d'une part, à obtenir un coefficient Uw de la façade vitrée d'au plus 1,4 W/m².K., voire même, selon les cas, compris entre 1,1 et 1,3 W/m².K et, d'autre part, à éviter toute condensation à des températures extérieures inférieures ou égales à - 5°C, les autres paramètres tels que l'humidité relative et la température à l'intérieur des bâtiments étant celles classiquement observées (typiquement comprise entre 30 et 60% et entre 15°C et 25°C respectivement), sans affecter les propriétés et les performances mécaniques du vitrage dans sa globalité (élément vitré, parties de fixation, support, etc.)

L'invention concerne donc un dispositif de fixation d'un système vitré sur une structure porteuse, ledit système comprenant au moins deux éléments vitrés, un élément vitré extérieur et un élément vitré intérieur, séparés l'un de l'autre par une cellule de gaz dont l'étanchéité est assurée par un espaceur périphérique et par une bague d'étanchéité, le gaz étant un gaz rare, un mélange de gaz rares ou un mélange d'air et de gaz rare(s) dans lequel la proportion en ce(s) dernier(s) est supérieure à 85%, ledit dispositif comportant un ensemble d'éléments de fixation, chacun comprenant une tige rigide dont une extrémité est associée à des moyens de serrage non rotulants sur le système vitré, lesquels comprennent :
- un plot de façade configuré pour traverser l'élément vitré intérieur de part en part par un alésage et configuré pour être engagé dans un alésage de l'élément vitré extérieur, ledit plot de façade comportant, vers l'extérieur, une tête élargie configurée pour venir en appui sur une portée de forme correspondante dudit alésage de l'élément vitré extérieur, et un corps fileté associé à un système à rotule qui est configuré pour être relié à la structure porteuse,
et
- ladite bague d'étanchéité (14), en matière polymère, configurée pour être engagée, sans contact direct, autour dudit plot de façade (3),
caractérisé en ce que:
- le plot de façade est en matériau polymère composite apte à assurer la fixation du système vitré sur la surface porteuse, comprenant un polymère de base et une teneur en charges organiques, inorganiques ou leur mélange comprise entre 0% et 65% en poids, par rapport au poids total du matériau polymère, le matériau polymère composite présentant une résistance à la traction d'au moins 95 MPa selon la norme ISO 527-2/1B/50, à 23°C, un module de Young de valeur d'au moins 3,5 GPa selon la norme ISO 527 et un coefficient de conductivité thermique linéaire d'au plus 0,5 W/m.K,
et en ce que
- la bague d'étanchéité est au moins partiellement recouverte sur sa surface d'une mince couche métallique.

Parmi les différents facteurs influant sur les performances globales du vitrage et, en définitif, d'une façade vitrée de bâtiments, le Demandeur à trouvé de manière surprenante que c'était précisément, d'une part, le plot de façade en matériau polymère composite, lequel matériau est choisi de manière à assurer la fixation de l'élément vitré sur la surface porteuse, ainsi que, d'autre part, la nature du gaz emprisonné dans le vitrage, qui permettaient de répondre au double but visé par l'invention. Les capacités isolantes du vitrage dans sa globalité s'en trouvent nettement améliorées grâce à l'absence de ponts thermiques au niveau du système de fixation, bien que de faibles niveaux soient tolérés à la condition qu'ils n'affectent pas de manière rédhibitoire la valeur désirée de Uw, et aucune condensation visible sur la surface interne de la façade vitrée et de ses composants n'est observée pour des températures externes inférieures à -5°C, pour des humidités relatives, à l'intérieur ambiant de bâtiments, d'au plus 70%. Les performances mécaniques des dispositifs de fixation selon l'invention sont similaires à celles obtenues avec ceux de l'art antérieur dont, en particulier, le plot de façade est en métal, tel qu'en acier inox.
Le dispositif de fixation est particulièrement adapté à tout type de vitrages dont la surface est aussi importante que 8 m² pour des vitrages classiques dans le domaine de l'invention, à savoir triples, doubles et simples vitrages. Les valeurs de résistance à la traction, de module de Young et de coefficient de conductivité thermique linéaire doivent être comprises comme étant des valeurs minimales pour satisfaire l'effet technique de l'invention, étant entendu que les exigences pour de grands vitrages, tels que de 8 m² de surface, requièrent des valeurs plus importantes de ces facteurs.

Le matériau polymère composite de fixation est donc choisi pour assurer une bonne isolation thermique du vitrage grâce à son faible coefficient de conductivité thermique linéaire (λ), typiquement d'au plus 0,5 W/m.K, préférentiellement d'au plus 0,45 W/m.K (l'acier ayant une valeur de 1 = 60 W/m.K). Cette faible valeur de λ est très avantageusement choisie sur la base de 4-6 dispositifs de fixation par système vitré.

En outre, la matière polymère composite du plot de façade selon l'invention doit ainsi présenter des propriétés mécaniques nécessaires notamment en termes de solidité, de dureté, de rigidité, de stabilité dimensionnelle dans des conditions extrêmes de températures (T) et d'humidité (-20°C < T < 70°C, Humidité Relative (HR) de 100%), de résistance à la friction, à la traction, à la flexion, à l'impact, à l'abrasion, au cisaillement, au fluage, aux UV et de résistance chimique. Ces exigences sont requises pour éviter que le vitrage ne se rompe sous l'effet des diverses sollicitations mécaniques et thermiques, et pour assurer sa durabilité dans le temps.

Parmi les propriétés énumérées ci-dessus et à l'issu d'essais préliminaires, le Demandeur est arrivé à la conclusion que le choix du matériau polymère devait répondre préférentiellement aux critères suivants.

Le premier est celui cité plus haut, relatif au coefficient λ.

Le deuxième critère est la stabilité mécanique structurale. La stabilité mécanique du matériau est à son tour préférentiellement définie par les paramètres de :
résistance à la traction (« tensile strength »), de valeur d'au moins 95 MPa, de façon particulièrement préférée, comprise entre 95 et 170 mPa, avantageusement entre 110 et 170 MPa ;
module de Young, de valeur d'au moins 3,5 GPa (ISO 527), préférentiellement d'au moins 8 GPa, et avantageusement comprise entre 3,5 et 25 GPa et très avantageusement entre 8 et 20 GPa, en particulier entre 3 et 12 GPa.

Le troisième concerne la durabilité dans le temps. Dans ce critère, sont définis :
la stabilité mécanique (paramètres du deuxième critère) à des températures comprises entre -30°C et 70°C ;
résistance au rayonnement UV ;
le faible pouvoir d'absorption d'eau, typiquement d'au plus 0,5% par 24h, avantageusement d'au plus 0,1% ; et
la réaction au feu, selon la norme EN 13501-1.

Le quatrième critère a trait à la manière dont le plot de façade en matériau polymère composite est fabriqué, avec des coûts de productions optimisés. Il est très avantageux de fabriquer ledit plot de façade par moulage par injection, technique qui s'avère être la moins coûteuse pour une production à l'échelle industrielle, notamment par la réduction des pertes de matières, et la plus fiable car elle évite notamment un éventuel façonnage ultérieur du plot. Ce façonnage optionnel peut affecter de façon rédhibitoire les propriétés mécaniques désirées lorsque la matière polymère composite est riche en fibres organiques ou minérales.
Par conséquent, tout matériau polymère composite du plot de façade satisfaisant à ces critères et paramètres convient pour la mise en oeuvre de l'invention, étant entendu que toutes les parties autres du dispositif de fixation peuvent être en métal, en polymère ou en matériau composite, selon des réalisations connues de l'homme du métier.
Le matériau polymère composite de fixation du système vitré sur la surface porteuse comprend un matériau polymère de base et entre 0% et 65% en poids, le pourcentage étant exprimé par rapport au poids total du matériau polymère, de charges organiques, minérales ou leur mélange.

Le matériau polymère de base est avantageusement choisi dans le groupe constitué par les matériaux thermoplastiques semi-cristallins de type polyarylamide, c'est-à-dire les polyamides aromatiques et semi-aromatiques, et les poly(éther)ₙ(cétones)ₘ (PEK), parmi lesquels on peut citer les polyétheréthercétones (PEEK), les polyétheréthercétonecétone (PEKK) et les polyéthercétoneéthercétonecétones (PEKEKK) ou le PEEK modifié, dont l'unité de répétition est [-O-Φ-O-Φ-CO- Φ-]n où Φ représente un cycle phényle, le PEEK étant le plus préféré.
Selon des modes de réalisation de l'invention, le matériau polymère peut ne comprendre que le polymère de base (cas où aucune charge n'est ajoutée), pour autant que les critères et paramètres ci-dessus soient respectés.

Avantageusement, le matériau polymère composite comprend, outre le polymère de base, de 10% à 65% en poids de charges, et les meilleurs résultats, en termes de qualité désirée (coefficient Uw et condensation), sont obtenus avec une teneur de charges comprise préférentiellement entre 20% et 65% en poids, avantageusement comprise entre 30 et 60% et, en particulier, entre 0 et 60% en poids.

Les charges inorganiques représentent préférentiellement les fibres de verre et les oxydes métalliques, tels que l'alumine, la silice, le dioxyde de titane ou leur mélange, les fibres de verre disponibles dans le commerce étant les plus préférées.

Les charges organiques peuvent représenter des polymères communément appelées fibres de carbone. Le mélange des charges organiques et inorganiques est typiquement constitué de plus de 50% en poids de charges inorganiques.
Les matériaux composites convenant tout particulièrement pour la mise en oeuvre de l'invention sont les PEEK ne contenant pas de charges, les PEEK contenant 30% de fibres de verres et ceux à base de polymère thermoplastique semi-cristallin de type polyarylamide contenant 60% de fibres de verre présentant les caractéristiques de résistance à la traction de 95-170 MPa (ISO 527 à 23°C), un module de Young compris entre 3,5 et 25 GPa, en particulier entre 3 et 12 GPa (ISO 527 à 23°C), et une densité comprise entre 1,30 et 1,8 (ISO 1183). Parmi les matériaux composites convenant tout particulièrement pour la mise en oeuvre de l'invention et disponibles dans le commerce, on peut citer le PEEK Ketaspire® KT-820 ne contenant pas de charges (Solvay-Belgique), le PEEK Ketaspire® KT-880 GF30, contenant 30% de fibres de verre (Solvay-Belgique) et le matériau IXEF® 1032, contenant 60% de fibres de verre, à base de polymère thermoplastique semi-cristallin de type polyarylamide (Solvay-Belgique). Ce dernier matériau est toutefois utilisé très avantageusement pour des structures vitrées dont la surface est inférieure à 8 m², pour des triples, doubles et simples vitrages, préférentiellement comprise entre 1 et 6 m².
Le Demandeur à également montré qu'une couleur noire de ces matériaux permettait une meilleure résistance aux UV à terme que pour une autre couleur.
Selon un mode de réalisation très préféré de l'invention, le système vitré est un double vitrage, dans lequel est défini un élément vitré extérieur en contact avec l'environnement extérieur, et un élément vitré intérieur étant en contact avec le milieu ambiant intérieur du bâtiment. De tels vitrages sont connus de l'homme du métier et ont été largement décrits dans l'art antérieur. Ils comportent deux éléments vitrés séparés l'un de l'autre par une cellule de gaz représentant un gaz rare, préférentiellement le krypton, l'argon ou le xénon, un mélange de gaz rares ou d'air et de gaz rare(s) dans lequel la proportion en ce(s) dernier(s) est supérieure à 85%, et dont l'étanchéité est assurée par un joint périphérique. De telles caractéristiques du milieu gazeux sont également requises pour obtenir l'effet technique de l'invention.

Un élément vitré est une plaque de verre d'épaisseur variable, typiquement comprise entre 6 et 20 mm, ou un assemblage par feuilletage ou laminage de deux ou plusieurs plaques de verre d'épaisseurs variables, typiquement comprises entre 6 et 20 mm, à l'aide d'un film ou d'une résine conférant à l'élément vitré feuilleté les qualités de résistance mécanique requise dans des applications architecturales et bien connues de l'homme de métier. L'élément vitré peut subir différents traitement chimiques et/ou physiques sur au moins une des faces, notamment un traitement thermique ou par le dépôt d'au moins une couche de matériau choisi en fonction des propriétés recherchées et/ou par traitement dans la masse du verre. Ces propriétés sont, en particulier, la résistance mécanique, le contrôle de la lumière, le contrôle du rayonnement infrarouge (IR) de courtes ou longues longueurs d'ondes, le contrôle acoustique etc. Dans les applications concernées, dites « V.E.A. », chaque plaque de verre est très avantageusement dite « de sécurité », durcie et/ou trempée.

Le vitrage selon l'invention représente une structure constituée d'au moins un système vitré, et comporte éventuellement un châssis, classiquement mis en oeuvre, en bois ou en métal tel que l'acier ou l'aluminium. Il peut être prévu un joint périphérique de liaison en polymère, ou en tout autre matériau, entre deux systèmes vitrés, lequel compote un joint sur la face externe du joint périphérique de liaison, en contact avec l'environnement l'extérieur, ainsi qu'un autre joint sur la face interne dudit joint périphérique, à l'intérieur du bâtiment. Les systèmes vitrés peuvent être de type vertical pour constituer la façade d'immeubles ou de bâtiments, ou être inclinés par rapport à un axe vertical d'un angle α défini selon la relation : 0 < α ≤ 90. Ils peuvent ainsi constituer des toitures ou de verrières.

La structure porteuse représente par exemple l'ossature d'un immeuble ou toute autre structure sur laquelle le système de fixation est lié.
Selon un mode de réalisation préféré de l'invention, l'alésage de chaque élément vitré, intérieur et extérieur, est un orifice traversant de sorte que le plot de façade est engagé par la face extérieure de l'élément vitré extérieur. Le plot de façade supporte dans ce cas chacun des deux éléments vitrés. Par ailleurs, un tel agencement est source de déperditions de chaleur et de ponts thermiques indésirables que l'invention permet de réduire de manière accrue.

Outre l'orifice traversant de l'élément vitré intérieur, l'alésage de l'élément vitré extérieur peut être un orifice non traversant, de sorte que le plot de façade est fixé dans l'épaisseur de l'élément vitré extérieur par sa face intérieure. Selon cet agencement, les déperditions de chaleur liées aux ponts thermiques sont moins importantes, mais le système de fixation selon l'invention permet également de fortement les limiter.

La tête élargie du plot de façade peut être de forme conique pour obtenir une bonne répartition des charges de compression sur la face, de préférence extérieure, de l'élément vitré, en chaque point de fixation.

Très avantageusement, le corps fileté du plot de façade est disposé, en saillie, d'une part, sur la face intérieure de l'élément vitré extérieur, le corps fileté étant agencé pour recevoir un écrou de serrage sur cette face, et, d'autre part, sur la face intérieure de l'élément vitré intérieur et est agencé pour recevoir un écrou de serrage sur cette face, et un logement taraudé apte à recevoir une extrémité filetée de la tige rigide portant un contre-écrou destiné à être serré contre l'extrémité du corps fileté, et la tête élargie du plot de façade étant de forme conique. Une bague entretoise peut-être avantageusement insérée autour du corps fileté du plot de façade et servant d'entretoise à l'élément vitré intérieur, ce qui empêche le contact direct du corps fileté avec l'élément vitré intérieur. Dans le contexte de l'invention, le corps fileté associé à un système à rotule signifie que cette solidarisation est effectuée par l'autre extrémité de la tige rigide, l'extrémité filetée étant engagée par vissage dans le logement taraudé. Par conséquent, l'association du corps fileté au système à rotule est avantageusement mise en oeuvre par l'autre extrémité de la tige rigide.

De préférence, la longueur totale du plot de façade, mesurée à partir de l'extrémité du corps fileté jusqu'à l'extrémité de la tête élargie, est comprise entre 35 et 80 mm et, en particulier, entre 35 et 75 mm. Cette longueur dépend de l'épaisseur de l'élément vitré ou des éléments vitrés d'un double vitrage, voire d'un triple vitrage et, le cas échéant, de l'espacement entre les deux éléments vitrés.

Le diamètre du plot de façade est mesuré sur la base du diamètre extérieur de la tête élargie. Typiquement, le diamètre est d'au moins 25 mm, et peut être en particulier compris dans la plage de valeurs allant de 25 mm à 75 mm.

L'extrémité filetée de la tige rigide permet de régler en chaque point de fixation l'espacement entre le système vitré et sa structure porteuse. En particulier, l'extrémité de la tige rigide porte un contre-écrou apte à être serré contre l'extrémité du corps fileté du plot de façade.

En outre, afin d'éviter un contact verre-métal ou verre-polymère composite qui pourrait être source de contraintes mécaniques trop élevées, une bague en matière polymère peut être interposée entre la tête du plot de façade et la portée de l'élément vitré extérieur. Avantageusement, les moyens de serrage comprennent en outre une bague en matière synthétique interposée entre la face intérieure de l'élément vitré et l'écrou de serrage.

Le système vitré comporte un espaceur périphérique maintenant un espacement voulu entre deux éléments vitrés. Cet espaceur est avantageusement pourvu, sur les deux faces en contact avec les éléments vitrés, d'un joint primaire de colle et d'un joint secondaire périphérique appliqué tout autour de l'espaceur, évitant toute fuite indésirable du gaz. Le joint secondaire est de préférence en polymère classiquement mis en oeuvre dans les doubles-vitrages, tel que les silicones, les polyuréthanes ou les polysulfures.

L'espaceur périphérique est de préférence en polymère classiquement mis en oeuvre dans les vitrages multiples, tel que les résines de silicone, le nylon, le polypropylène (PP) contenant éventuellement des charges minérales et/ou organiques, les mousses polyuréthanes ou les résines polyamides. Le polymère constituant l'espaceur peut être recouvert d'un film métallique sur la totalité de sa surface externe, c'est-à-dire la surface opposée à celle en contact avec la lame de gaz, et au moins 10% de la surface des deux faces, selon la largeur de la section, et, très avantageusement, au moins 50% et tout particulièrement entre 50 et 75%. L'épaisseur de la couche métallique est d'au plus 0,2 mm. Le Demandeur à montré que cette composition de l'espaceur contribuait aux effets désirés, notamment sans affecter de façon rédhibitoire la valeur du coefficient Uw, ni l'étanchéité.
En outre, le polymère recouvert du film métallique dudit espaceur présente préférentiellement une section creuse de forme rectangulaire, et, de préférence, une rainure et/ou un rétrécissement local de sa largeur sur chaque face en contact avec les éléments vitrés pour permettre l'application d'une colle fixante classiquement mise en oeuvre dans la fabrication de vitrages multiples, telle que les butyles par exemple, assurant à la fois le collage de l'espaceur sur chaque élément vitré qu'il sépare et l'étanchéité de la cellule de gaz. La combinaison du matériau polymère de l'espaceur, caractérisé par sa basse conductibilité thermique, et d'un film métallique contribue à atteindre le double but de l'invention tout en assurant une excellente étanchéité à la fuite de gaz et à l'humidité du vitrage multiple.

En outre, le dispositif de fixation selon l'invention comporte une bague d'étanchéité, de forme circulaire ou torique par exemple, engagée, sans contact direct, autour du corps du plot de façade, laquelle présente les mêmes fonctions que l'espaceur périphérique en les différentes zones où la fixation des vitrages est réalisée à l'aide de plots de façade.
Selon des modes de réalisation, la bague d'étanchéité peut comporter sur chacune de ses deux faces, c'est-à-dire celles en contact avec les parois des éléments vitrés, au moins une rainure remplie d'un joint primaire de colle, par exemple butyle, permettant sa fixation sur les deux éléments vitrés dont la bague d'étanchéité assure la séparation. La section de la bague d'étanchéité est typiquement rectangulaire ou carrée, dont les coins extérieurs opposés à la cellule de gaz sont préférentiellement biseautés, permettant d'obtenir un volume de remplissage et une surface de contact suffisants pour permettre l'application d'un joint secondaire périphérique, constitué d'une matière polymère typiquement de silicone, polysulfure ou de polyuréthane, permettant de sceller l'assemblage des éléments vitrés et d'éviter, d'une part, que l'humidité ne pénètre dans la lame de gaz et, d'autre part, que le gaz ne s'échappe. Ce joint peut être placé entre la bague d'étanchéité et la bague entretoise.
Le Demandeur a également montré que la nature de bague d'étanchéité avait une influence sur les propriétés mécaniques et thermiques recherchées.
La bague d'étanchéité est en matière polymère prédéterminée au moins partiellement recouverte sur sa surface d'une mince couche métallique. Cette structure particulière permet de diminuer encore davantage les ponts thermiques sans altérer les qualités mécaniques requises de fixation et de maintien du vitrage sur la structure porteuse, d'empêcher toute formation de condensation sur la surface interne de la façade vitrée et de ses composants à des températures externes inférieures ou égales à -10°C, voire -15°C, pour des humidités relatives, à l'intérieur ambiant de bâtiments, d'au plus 70%. Enfin, cette structure assure une bonne adhérence du joint torique butyle et du remplissage de colle sur la bague d'étanchéité. L'absence de condensation peut s'expliquer par le fait que pour une température à l'intérieur ambiant d'un bâtiment ou d'un espace confiné comportant des façades à base d'éléments vitrés et les dispositifs de fixation selon l'invention (T°C_{IF}) comprise entre 18°C et 22°C, d'humidité relative habituellement comprise entre 30 et 60%, la température de surface de la face interne de l'élément vitré intérieur et des parties des systèmes de fixation également en contact avec le milieu ambiant intérieur (T°C_{EVS}) est supérieure ou égale à la température de point de rosée de l'air ambiant (T°C_{PR}). A titre d'exemple, pour un milieu intérieur ambiant d'un bâtiment classique ou d'un espace confiné d'humidité relative de 50%, T°C_{IF} de 20°, T°C_{EVS} est supérieure ou égale à la température de point de rosée sur l'élément vitré, T°C_{PR}, dont la valeur est de l'ordre de 9°C.
La matière polymère de la bague d'étanchéité est très avantageusement choisie dans le groupe constitué par le polypropylène (PP) éventuellement renforcé par des charges minérales selon des pourcentages compris entre 10 et 50%, le polyéthylène (PE), le polyéthylène téréphtalate (PET), le polyester, les polymères de silicone et les terpolymères d'éthylène-propylène (EPDM). De tels polymères peuvent représenter des résines et/ou des élastomères, à la condition qu'ils répondent aux exigences ci-dessus.
La bague d'étanchéité est de préférence de forme torique, ou, de façon très préférée, de forme circulaire et de section carrée ou rectangulaire, éventuellement biseautée en ses coins extérieurs à la lame de gaz. Dans ce dernier cas, la section est définie par une largeur, typiquement comprise entre 4 et 6 mm, et une longueur de dimension supérieure ou égale à la largeur, comprise de préférence entre 8 et 25 mm.
Egalement dans le cas d'une bague d'étanchéité circulaire de section carrée ou rectangulaire, la couche métallique recouvre la totalité de la surface interne de la bague d'étanchéité, c'est-à-dire la surface opposée à celle en contact avec la lame de gaz, et au moins 10% du périmètre de la section, selon la largeur de la section, et, très avantageusement, au moins 50% et tout particulièrement entre 50 et 75%, en particulier entre 50 et 100%. L'épaisseur de la couche métallique est d'au plus 0,2 mm et, de façon préférée, d'au plus 0,05 mm, les gammes 0,002 mm-0,05 mm et très avantageusement 0,004 mm-0,05 mm en épaisseur étant les plus préférées. Le Demandeur à montré que cette disposition de la couche et son épaisseur permettait d'obtenir les effets désirés, notamment sans affecter de façon rédhibitoire la valeur de Uw, ni l'étanchéité. Dans le cas d'une bague d'étanchéité torique, la surface externe est entièrement recouverte par la couche métallique, définie ci-dessus, et ainsi qu'au moins 50% du périmètre de la section.
De préférence, le métal de la couche est avantageusement choisi parmi les métaux susceptibles d'être déposés par la technique du dépôt chimique en phase gazeuse (CVD). En particulier, il est choisi dans le groupe constitué par Al, Ti, Cu, Cr, Sn, bronze et les oxydes métalliques de ces métaux, tels que TiO₂ et CrO₂, leurs alliages ou leur mélange.
Pour un double vitrage de 80 cm x 80 cm (2 verres simples de 10 mm d'épaisseurs et lame d'argon de 15 mm), le verre intérieur étant recouvert d'une couche basse émissivité, typiquement de 0,2-0,3, par exemple de SnO₂:F d'épaisseur comprise entre 200 et 500 nm, on a mesuré une valeur de Uw=1.38 W/m².K, suivant la norme EN 674.

Selon des modes de réalisation de l'invention, le système vitré est un triple vitrage constitué de l'assemblage de trois plaques vitrées, un élément vitré extérieur, un élément vitré intérieur et un élément vitré intermédiaire disposé entre les deux, et enserrant, deux par deux, deux cellules de gaz dont les moyens de scellement sont également dédoublés. Les cellules de gaz et leurs moyens de scellement sont similaires aux éléments constitutifs d'un double vitrage décrits précédemment. De même, les éléments de serrage d'un triple vitrage V.E.A. sont identiques à ceux utilisés dans le cas du double vitrage, à l'exception de quelques éléments supplémentaires. Ces éléments supplémentaires sont, d'une part, une bague intermédiaire en polymère qui est placée autour du corps du plot de façade, jouant le rôle d'entretoise entre la plaque vitrée intermédiaire et le corps fileté du plot de façade, et présentant un élargissement de son diamètre sur une partie de sa section, de préférence sur la moitié, afin de permettre un positionnement sûr et précis de la plaque vitrée intermédiaire, et, d'autre part, une rondelle en matière plastique dont l'épaisseur est choisie de manière à assurer le positionnement optimal de la bague intermédiaire placée entre la plaque vitrée intérieure et le corps fileté du plot de façade. En outre, l'utilisation d'un triple vitrage permet d'ajouter une fonctionnalité au système vitré, par exemple en traitant la plaque vitrée intermédiaire à l'aide d'un traitement chimique et/ou physique ou encore en utilisant le second espace vide du vitrage multiple à des fins diverses, telles que l'insertion d'éléments décoratifs et/ou fonctionnels, cellules photovoltaïques ou diodes électroluminescentes.

Le système à rotule comporte préférentiellement une tête sphérique à l'extrémité opposée à celle de l'extrémité filetée de la tige rigide apte à être maintenue de façon rotulante dans un réceptacle de forme complémentaire, lequel est ménagé dans une pièce de fixation assujettie à la structure porteuse. La pièce de fixation comporte avantageusement, d'une part, un orifice taraudé dont le fond présente une portée sphérique pour ladite tête, et dans lequel peut être vissée une vis à extrémité en forme de calotte sphérique concave pour pouvoir freiner la rotation de la tête sphérique de la tige ou, à tout le moins, d'en régler le jeu, et, d'autre part, un corps fileté apte à traverser l'ouverture d'une plaque de fixation et à y être serré grâce à un écrou de freinage engagé dans ledit corps. Cet ensemble permet de régler la force de serrage de l'écrou de freinage.

Une rondelle-frein peut être interposée entre ledit écrou de freinage et ladite plaque de fixation, et également un cache-poussière peut être prévu autour de ladite tige rigide et qui s'applique contre la pièce de fixation dans le but de protéger la rondelle.

De préférence, la tige rigide du système de fixation s'étend hors de la pièce de fixation par un orifice conique évasé vers l'extérieur, l'angle d'ouverture de cet orifice conique étant typiquement compris entre 25-35°. Cet agencement permet d'obtenir un grand débattement de la tige rigide dans la pièce de fixation, ce qui autorise la déformation de la façade par diverses contraintes mécaniques extérieures (vent, neige etc.) et/ou répondre aux différents jeux de montage de la façade.

Des plaques de fixation sont très avantageusement prévues pour relier le système à rotule à la structure porteuse par les angles des éléments vitrés. Ces plaques peuvent être en forme de croisillons à quatre branches ce qui autorise la fixation quatre par quatre ou bien encore en forme de pattes pour une fixation deux par deux et présentant des orifices traversants de liaison du système de fixation à la structure porteuse.
En alternative, ces plaques de fixation peuvent être reliées à la structure porteuse dans des zones autres que celles voisines des coins de(s) éléments) vitré(s), en particulier près de la périphérie ou du bord de l'élément vitré le long des côtés en longueur ou en largeur.
De préférence, les plaques de fixation sont connectées par leur partie centrale à des tiges rigides les reliant à la structure porteuse ou encore individuellement. Ils comportent des orifices traversants en extrémités des branches. Ces dispositions permettent de garantir les tolérances de montage nécessaires ainsi que les variations des contraintes climatiques et thermiques (vent, neige etc.).

L'invention concerne également l'utilisation d'au moins un dispositif de fixation d'un système vitré sur une structure porteuse, tel que défini précédemment, ledit système comprenant au moins deux éléments vitrés, un élément vitré extérieur et un élément vitré intérieur, séparés l'un de l'autre par une cellule de gaz, étant un gaz rare, un mélange de gaz rares ou d'air et de gaz rare(s) dans lequel la proportion en ce dernier est supérieure à 85%, dont l'étanchéité est assurée par un espaceur périphérique, le dispositif comprenant un ensemble d'éléments de fixation comportant un plot de façade en un matériau polymère composite apte à assurer la fixation du système vitré sur la surface porteuse comprenant un polymère de base et une teneur en charges organiques, inorganiques ou leur mélange comprise entre 0% et 65% en poids, par rapport au poids total du matériau polymère, pour obtenir un coefficient d'échange thermique Uw de la façade vitrée d'au plus 1,4 W/m².K., et pour éviter toute condensation de la façade vitrée à des températures extérieures inférieures ou égales à -5°C, pour des humidités relatives, à l'intérieur ambiant de bâtiments, d'au plus 70%.
Grâce à ce plot en matériau polymère composite et la nature du gaz selon l'invention, on peut l'utiliser très avantageusement afin d'obtenir un dispositif de fixation conférant à la façade vitrée d'un bâtiment, typiquement de type V.E.A., une valeur réduite de Uw et permettant d'éviter toute condensation, ou à tout le moins, de la réduire considérablement.
Selon un mode de réalisation, le dispositif de fixation est utilisé dans le cas où le vitrage est un double vitrage à deux éléments vitrés comportant une bague d'étanchéité engagée autour du corps du plot de façade et enserrée entre deux éléments vitrés, laquelle est en matière polymère au moins partiellement recouverte sur sa surface d'une couche métallique, ladite surface étant définie par la totalité de la surface interne la bague d'étanchéité et par au moins 10% de périmètre de la section, selon la largeur de la section, l'épaisseur de la couche métallique étant d'au plus 0,2 mm, pour obtenir un coefficient d'échange thermique Uw de la façade vitrée d'au plus 1,4 W/m².K et pour éviter toute condensation de la façade vitrée à des températures extérieures inférieures ou égales à -15°C, pour des humidités relatives, à l'intérieur ambiant de bâtiments, d'au plus 70%.
Avantageusement, le matériau composite présente une résistance à la traction d'au moins 95 MPa selon la norme ISO 527-2/1B/50, à 23°C, un module de Young de valeur d'au moins 3,5 GPa selon la norme ISO 527 et un coefficient de conductivité thermique linéaire d'au plus 0,5 W/m.K.

En outre, les matériaux composites et leurs caractéristiques ont été définis plus haut.
L'espace confiné représente par exemple l'intérieur habitable d'un immeuble, d'un bâtiment ou des structures plus petites utilisant des vitrages et leurs systèmes de fixation sur des surface porteuse ou armatures.
La structure préférée de la bague d'étanchéité, sa nature chimique, son recouvrement par la couche métallique selon des modes avantageux et préférentiels ont été définis précédemment. Il en est de même des modes préférentiels de réalisation de dispositif de fixation.

Selon un autre mode de réalisation de l'invention, le dispositif de fixation, le vitrage, les moyens de serrage etc., sont ceux décrits dans le brevet EP 0 617 190 dont le Demandeur est le titulaire.

L'invention est illustrée par des exemples de réalisation aucunement limitatifs en référence aux dessins dans lesquels :
- la figure 1 montre un dispositif de fixation sur un double vitrage ;
- la figure 2 est une variante de la figure 1 dans le cas d'un triple vitrage ; et
- la figure 3 montre une vue de face partielle d'une façade V.E.A. avec un ensemble d'éléments vitrés juxtaposés et leurs systèmes d'attache.

### Exemple 1

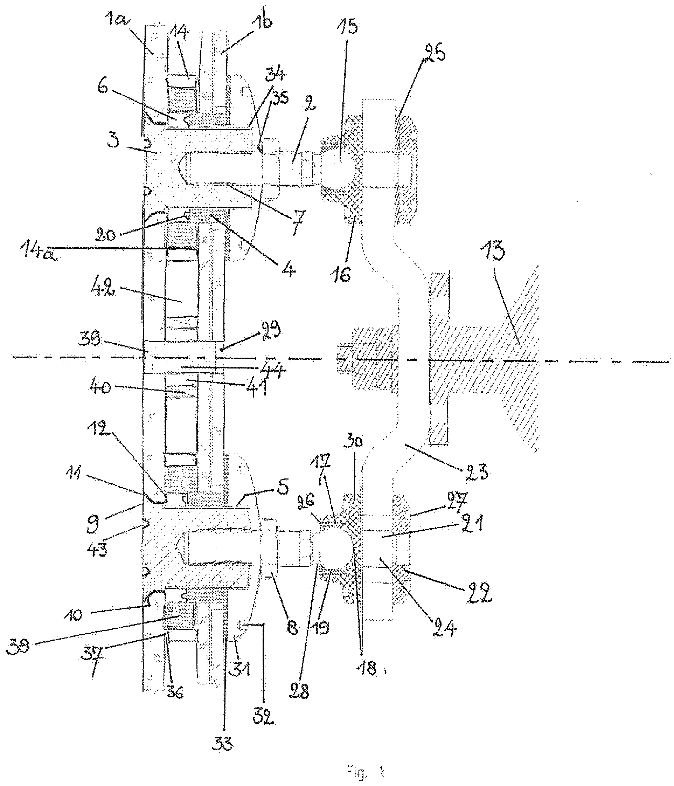

Le dispositif de fixation (figure1) du système vitré représenté par un double vitrage comprend principalement un plot de façade 3 en PEEK comportant 30% en poids de fibres de verre, à tête élargie de forme conique 9, engagé dans un alésage de forme correspondante 10 de l'élément vitré extérieur 1a de 8 mm d'épaisseur, le double vitrage étant séparé d'un autre par un joint de liaison 44 de 15 mm d'épaisseur en aérogel et est protégé par un joint de silicone 39 sur la face externe ainsi que par un joint silicone 29 sur la face interne. Une bague en polymère 11 est interposée entre la tête 9 du plot de façade 3 et la portée de l'élément vitré 1a. La face extérieure de la tête 9 du plot 3 présente des alésages 43 pour l'immobiliser en rotation. Le plot 3 comporte un corps fileté 5 sur lequel est engagé un premier écrou de serrage 6, avec interposition d'une rondelle 12 en polymère, cet écrou pouvant être entraîné en rotation grâce à des petits alésages 20 jusqu'au serrage du plot de façade 3 sur l'élément vitré 1a. Une bague entretoise en EPDM 4 est insérée autour du corps fileté 5 du plot de façade 3 et sert d'entretoise à la plaque vitrée intérieure de l'élément vitré 1b. La plaque vitrée 1b, constituée d'un assemblage par feuilletage de deux plaques vitrées de 4 mm, est séparée de la plaque vitrée extérieure 1a par, d'une part une bague d'étanchéité 14 entourant le système de fixation traversant, et d'autre part un espaceur périphérique 40 dans la zone périphérique de l'élément vitré. L'espaceur périphérique 40 ainsi que la bague d'étanchéité 14 sont collés sur leurs deux faces aux plaques vitrées 1a et 1b qu'ils séparent grâce à un joint de colle butyle 37, appelé joint primaire, lui-même protégé par un joint de silicone 38, appelé joint secondaire. Le joint de colle butyle 37 fixant la bague d'étanchéité 14 est appliqué dans les deux rainures 36 creusées dans les faces de la bague d'étanchéité 14. La bague 4 comporte plusieurs encoches sur sa périphérie permettant d'insérer le joint secondaire de silicone 38 jusqu'à remplir la cavité encerclée par la bague d'étanchéité 14. De même, un joint secondaire périphérique de silicone 41 est appliqué tout autour de l'espaceur 40, lui-même collé sur les plaques vitrées 1a et 1b à l'aide d'un joint butyle primaire commun à l'état de l'art de la fabrication des vitrages multiples.

Sur le corps fileté 5 du plot de façade 3 est engagé un second écrou de serrage 31, avec interposition d'une bague 33 en polymère, cet écrou pouvant être entraîné en rotation grâce à des petits alésages 32 jusqu'au serrage de l'élément vitré 1b sur le plot 3. L'écrou 31 présente un alésage 34 correspondant au corps fileté 5 suffisamment profond pour assurer le serrage du vitrage 1b sur le plot 3. Ici l'alésage est non traversant. Dans ce cas, l'écrou 31 présente un orifice 35 sur sa face opposée au vitrage afin de permettre le passage pour vissage de la tige rigide 2 dans l'alésage 7 du plot 3.
La tige rigide 2 en acier est vissée jusqu'à une position désirée par son extrémité filetée dans un logement axial taraudé 7 du plot 3 et est fixée en position grâce à un contre-écrou 8 serré sur l'extrémité du corps fileté 5.
La bague d'étanchéité 14 en polypropylène est circulaire de section rectangulaire dont les coins extérieurs à la cellule de gaz 42 sont biseautés. Cette bague 14 est recouverte sur la surface extérieure à la cellule de gaz 42 et sur 50% du périmètre de la section d'une couche d'aluminium 14a, dont l'épaisseur est de 0,004 mm. Le système rotulant peut être le même dans tous les cas. Il est pourvu à l'extrémité de la tige rigide 2 d'une tête sphérique 15 en acier maintenue dans une pièce de fixation 16. Elle comporte une tête élargie 30 grâce à laquelle elle peut prendre appui contre l'extrémité d'une branche de plaque de fixation 23 lorsque son corps fileté 21 est engagé dans une ouverture 24 de cette plaque 23. Cette plaque 23 peut être fixée par l'intermédiaire d'un écrou 22 pourvu d'alésages de rotation 27, bloqué en rotation sur le corps 21 grâce à une rondelle-frein 25. La pièce fixation 16 comporte en outre un trou taraudé 17 terminé par une portée en forme de secteur sphérique 18 et dans lequel s'engage une vis 19, après engagement de la tige rigide 2 dans la pièce 16. Cette vis 19 porte en bout une calotte sphérique concave, son vissage dans le trou taraudé permettant de freiner la rotation de la tête 15 dans son logement ou, à tout le moins, d'éviter l'existence de jeux autour de cette tête 15.
Le trou 26 par lequel la tige rigide 2 sort de la pièce 16 a la forme d'un cône évasé vers l'extérieur, dont l'angle d'ouverture est de l'ordre de 30°, ce qui confère à la tige 2 une grande latitude de débattement en conique avec pour conséquence les avantages énumérés précédemment.
Un cache poussière 28 en forme de rondelle souple, engagé dans la tige 2 et appliqué sur la pièce de fixation 16, permet de protéger la rotule lors de ces débattements et d'éviter ainsi les coincements.

### Exemple 2

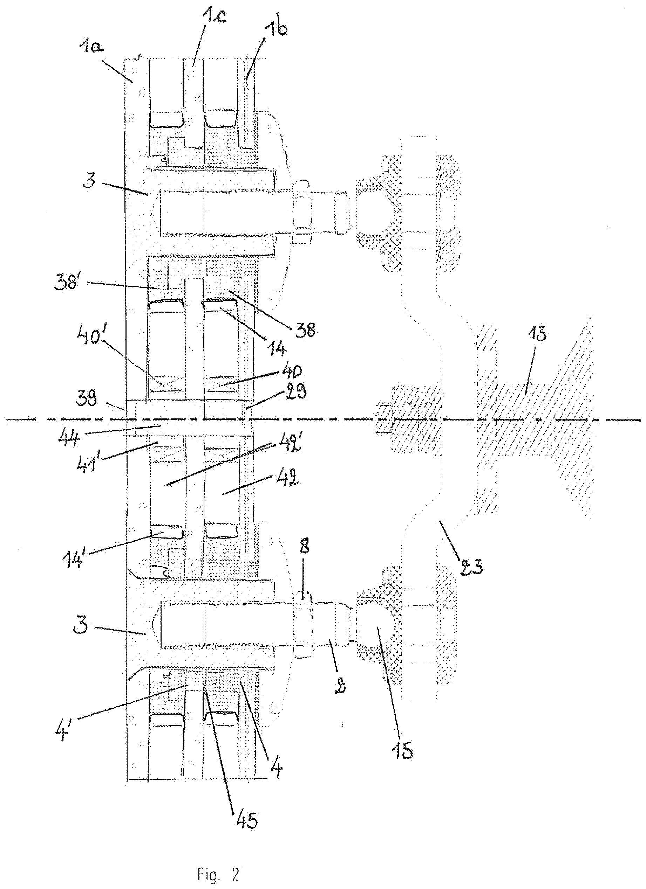

Une variante du système décrit ci-dessus pour triple vitrage est montrée à la figure 2. Tous les éléments de fixation du dispositif sont similaires à ceux pour un double vitrage et sont complétés par certains éléments supplémentaires dû au triple vitrage. Outre les plaques vitrées extérieure 1a et intérieure 1b, le triple vitrage comprend également une plaque vitrée intermédiaire 1c, ici monolithique d'une épaisseur de 6 mm. Une bague en matière plastique EPDM 4' est insérée autour du corps du plot de façade 3 et présente sur sa face extérieure un diamètre élargi afin de caller la plaque intermédiaire 1c et d'ainsi empêcher cette dernière de tomber en cas de rupture de la plaque 1a. Entre les bagues 4' et 4 se trouve une rondelle joint 45 en polymère permettant le positionnement optimal de la bague 4. Une seconde cellule de gaz 42' est présente et implique le dédoublement des éléments qui la scellent, à savoir un second espaceur périphérique 40' et son joint de silicone périphérique 41', une seconde bague d'étanchéité 14' et son joint de silicone 38' l'entourant.

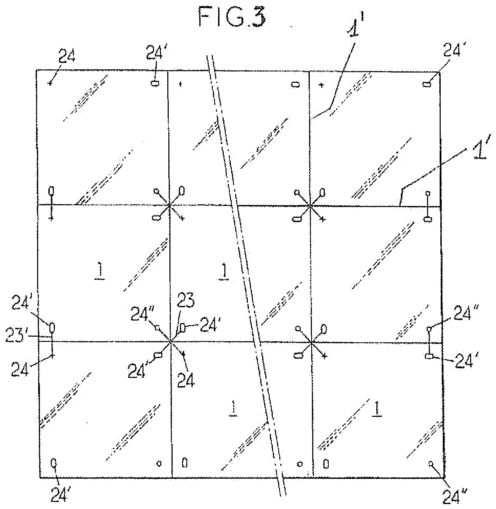

A la figure 3 est représentée une façade V.E.A. constituée de plusieurs éléments vitrés 1 liés entre eux par des joints de liaison 1'. Ces élément vitrés 1 sont fixés à la structure porteuse par des plaques de fixation 23 à quatre branches, dont les extrémités sont percées d'un orifice 24, 24' et 24", aux emplacements inférieurs en lesquels quatre éléments vitrés 1 se rejoignent. Ils peuvent, en variante, être fixés par des pattes de fixation 23' à deux branches aux emplacements extérieurs en lesquels se rejoignent seulement deux éléments vitrés 1. Enfin, en variante encore, les éléments 1 sont fixés directement par des barres rigides analogues aux barres 13 de la figure 1, ceci à l'emplacement des quatre angles du vitrage.

### Exemple 3

Le dispositif de fixation selon l'Exemple 1 a été considéré avec les spécificités suivantes. Le plot de façade 3 est réalisé en trois matériaux différents : PEEK KetaSpire® KT-820 (Solvay) ne contenant pas de charges, PEEK KetaSpire® KT-880 GF30 (Solvay), contenant 30% de fibres de verre, et IXEF® 1032 (Solvay) un polyarylamide contenant 60% de fibres de verre. La longueur totale du plot de façade est 48 mm, le diamètre (mesuré sur la base de la tête élargie 9) est de 50 mm et le corps fileté 5 présente une longueur de 36 mm. La bague 14 en PET est totalement recouverte d'un film métallique d'un alliage TiO₂-Ti de 4 □m d'épaisseur.

Des essais ont été effectués afin de mesurer les performances des dispositifs de fixation décrits plus hauts en termes de résistance mécanique, en position verticale et horizontale.

A cette fin, des bancs d'essais ont été fabriqués comportant une armature métallique de dimensions telles qu'elles supportent un double vitrage de 115 x 170 cm, chaque vitre ayant une épaisseur de 10 mm et séparés hermétiquement par une lame de gaz Argon de 15 mm. Le double vitrage est fixé sur le banc d'essai par l'intermédiaire de 4 dispositifs de fixation décrits plus hauts placés aux extrémités/coins du banc d'essai. Un autre mode de fixation prévoit 6 dispositifs de fixations, 4 aux coins et 2 aux milieux des longueurs.
Les échantillons ainsi fabriqués ont ensuite été soumis à différents essais :
- Essais de charge ultime (UL) en compression, qui simule la compression du vitrage par le vent : 300 DaN/plot, parallèle à l'axe du plot, + poids du vitrage de 600 DaN, perpendiculaire à l'axe du plot (Norme EUROCODE EN 1991);
- Essais de compression maximale jusqu'à rupture du plot : jusqu'à 1500 DaN + poids du vitrage de 600 DaN, perpendiculaire à l'axe du plot ;
- Essai de charge ultime (UL) en dépression, qui simule le cas où le vent exerce une force contraire à la compression : 300 DaN/plot, parallèle à l'axe du plot + poids du vitrage de 600 DaN, perpendiculaire à l'axe du plot (Norme EUROCODE EN 1991);
- Essais de dépression maximale jusqu'à rupture du plot : jusqu'à 1500 DaN + poids du vitrage de 600 DaN, perpendiculaire à l'axe du plot. Pour les bancs d'essais munis de 4 dispositifs de fixation, la valeur de UL à appliquer sur le vitrage est de 1200 DaN, pour 6 dispositifs de fixation, de 1800 DaN.
Pour que les matériaux puissent être considérés comme convenant au maintien du vitrage de façade, ils doivent résister aux contraintes définies ci-dessus.
Les dispositifs de fixation (4 et 6) résistent non seulement aux contraintes UL en compression et dépression, mais les essais de rupture en compression et dépression donnent des valeurs supérieures à 1500 DaN.

### Exemple 4 : Etanchéité du gaz

Les normes européennes, notamment la norme EN 1279, en termes de standards architecturaux imposent une perte du gaz présent entre deux vitres d'un double vitrage inférieure à 1% par an. La bague d'étanchéité 14 doit donc permettre d'atteindre cet objectif du fait que le dispositif de l'invention est un système traversant en partie métallique. Etant donné que les matériaux polymères de ces bagues sont connus pour laisser progressivement échapper le gaz (étanchéité ne satisfaisant plus la norme EN 1279), des essais et mises aux points ont été effectués selon la norme EN 1279-3 relative au standard de mesure de perte de gaz.
On a considéré un double vitrage (35 x 35 cm), 10 mm/15 mm Argon/10 mm (chaque vitre ayant 1 cm d'épaisseur séparés par 1,5 cm d'argon) au centre duquel le dispositif de l'invention a été fixé, lequel est comporte des plots de façade en matériau de l'Exemple 3. Les essais ont été effectués avec des bagues d'étanchéité 14 en PET entièrement recouvertes ou revêtues d'alliages de Cr-CrO₂ ou de Ti-TiO₂ de 4 □m d'épaisseur.
Le Tableau 1 donne les résultats obtenus.

**Tableau 1**

| Contenu en gaz (Argon) (%) | | | |
|---|---|---|---|
| Dispositif + bague | Initial | Après 24 h | Après 500 h |
| En PET | 98,5 | 98,2 | 97,8 |
| PET recouvert à 100% de Cr-CrO₂ - 4 □m | 90,2 | 90,2 | 90,2 |
| PET recouvert à 100% de Ti-TiO₂ - 4 □m | 92,1 | 92,1 | 92,1 |

Les résultats montent la bague seule ne permet pas d'assurer une étanchéité parfaite à long terme, et qu'une épaisseur de 4 □m de pellicule métallique permet d'obtenir l'étanchéité parfaite.

### Exemple 5 : Essais d'isolation thermique

Le but de ces essais est de vérifier si le dispositif de fixation muni d'un plot en polymère engendre la formation de condensation sur la partie intérieure du vitrage à Tᵢₙₜ = 20°C, lorsque la surface extérieure du vitrage est à une température Tₑₓₜ = -15°C et portée à une humidité relative HR de 50%.
A cette fin, un dispositif de fixation de l'Exemple 3, comportant une bague d'étanchéité 14 totalement recouverte d'un film métallique d'un alliage TiO₂-Ti de 4 □m d'épaisseur est fixé au centre d'un double vitrage (35 x 50 cm), lequel est ensuite placé dans un caisson en bois de façon à isoler ou confiner la surface intérieure de la surface extérieure. Les essais consistent à mesurer la température du plot en polymère du côté de la surface intérieure.
Les résultats des essais sont présentés au Tableau 2 ci-dessous.

**Tableau 2**

| Dispositif de fixation | Tout en métal | Plot de PEEK KT-820 | Plot de PEEK KT-880 GF30 | IXEF 1032 | Plot en métal ; bague PET totalement recouverte de TiO₂-Ti |
|---|---|---|---|---|---|
| T°C mesurée sur le plot | 7 | 15 | 14,5 | 13,8 | 11,3 |

Ces essais montrent l'amélioration sensible de l'isolation thermique lorsque le dispositif de fixation est muni de plots en polymère, par rapport à un dispositif de fixation déjà existant tout en métal, c'est-à-dire en acier et la bague en aluminium. On montre également l'importance de la bague en matériau polymère recouverte d'une couche métallique qui assure l'étanchéité et une meilleure isolation thermique.

Par ailleurs, on a montré à l'aide d'une caméra IR classique qu'avec le dispositif de l'invention on observe que la condensation au voisinage du plot de façade, mesuré sur la surface intérieure, est quasi inexistante en comparaison le dispositif de fixation classique tout en métal. Ainsi, avec le dispositif de l'invention, la zone du vitrage ayant une température pour laquelle il est observé de la condensation, HR de 50% et T°C_{PR},= 9,27, est beaucoup moins importante qu'avec un dispositif existant entièrement métallique.

### Exemple 6 : ponts thermiques

Le but de cet Exemple est de montrer que le dispositif de fixation de l'invention permet la réduction notable des ponts thermiques au niveau des pièces de fixation par rapport à un dispositif entièrement métallique.
On a préparé 4 échantillons de doubles-vitrages (39 x 39 cm), selon l'Exemple 3, placés dans un cadre en bois, dont les dimensions sont donc 78 x 78 cm. Un ruban adhésif de couleur noire a été fixé aux jonctions des 4 vitrages. Les 4 vitrages sont soutenus, sur leur surface externe, à l'aide d'un croisillon à quatre branches dont chaque extrémité comporte le dispositif de l'invention et permet de maintenir et fixer chaque vitrage. Le cadre en bois avec les 4 vitrages est ensuite placé dans une chambre de vieillissement UltraVitalux afin de simuler l'énergie solaire, et la surface interne de l'ensemble (opposée à celle munie du croisillon) a été chauffée pendant au moins 5h30 par des lampes UltraVitalux utilisées selon la norme EN 12543 placées à 1 m du cadre.
Les résultats en termes de mesure de la température du vitrage sur la surface interne, après au moins 5h30 de chauffage, par une caméra IR disponible dans le commerce, ont montré qu'avec le dispositif de l'invention cette température était inférieure d'environ 3°C, avec les trois matériaux composites, à celle obtenue en considérant le même dispositif entièrement métallique de l'art antérieur (T = 43,5 °C dispositif métallique et T = 40,5 °C dispositif de l'invention).

Par conséquent, le dispositif de l'invention réduit les ponts thermiques et donc augmente l'isolation thermique.

### Exemple 7

Cet Exemple est destiné à montrer la résistance du dispositif de fixation à la traction, à la compression et au cisaillement lorsque ces contraintes sont appliqués sur la tige rigide 2 vissée dans le logement taraudé 7 du corps fileté 5 du plot 3 en matériaux polymères décrits à l'Exemple 3.
On a considéré un double vitrage (20 x 20 cm) 10 mm/15 mm Argon/10 mm, au centre duquel est fixé le dispositif de fixation.
Les essais ont été réalisés en utilisant un dispositif CSTC (Centre Scientifique et Technique de la Construction - Belgique), et selon l'Avis Technique ETAG 002. Aucune dégradation ou déformation visible du plot, notamment du corps fileté 5, telle que rupture du filetage ou du corps, ne doit être observé lorsque des contraintes de 3000 N leur sont appliquées.
Les résultats montrent que les essais effectués à T = -30°C, 23°C et 70°C, pour les trois matériaux composites considérés, aboutissent à des dégradations du dispositif de fixation bien supérieures à 3000 N. A titre d'exemple, la déformation en compression à T = 23°C est observées pour 22280 N, et en traction pour 14400 N.

Ces résultats démontrent que le dispositif de fixation de l'invention est très adapté aux nouveaux vitrages VEA tant sur le plan de la résistance mécanique que sur le plan de l'isolation thermique, par réduction notamment des ponts thermiques.

## Revendications

1. Dispositif de fixation d'un système vitré sur une structure porteuse, ledit système comprenant au moins deux éléments vitrés, un élément vitré extérieur (1a) et un élément vitré intérieur (1b), séparés l'un de l'autre par une cellule de gaz (42) dont l'étanchéité est assurée par un espaceur périphérique (40) et par une bague d'étanchéité (14), le gaz étant un gaz rare, un mélange de gaz rares ou un mélange d'air et de gaz rare(s) dans lequel la proportion en ce(s) dernier(s) est supérieure à 85%,
ledit dispositif comportant un ensemble d'éléments de fixation, chacun comprenant une tige rigide (2) dont une extrémité est associée à des moyens de serrage non rotulants sur le système vitré, lesquels comprennent :
- un plot de façade (3) configuré pour traverser l'élément vitré intérieur (1b) de part en part par un alésage et configuré pour être engagé dans un alésage (10) de l'élément vitré extérieur (1a), ledit plot de façade (3) comportant, vers l'extérieur, une tête élargie (9) configurée pour venir en appui sur une portée de forme correspondante dudit alésage (10) de l'élément vitré extérieur (1a), et un corps fileté (5) associé à un système à rotule qui est configuré pour être relié à la structure porteuse,
et
- ladite bague d'étanchéité (14), en matière polymère, configurée pour être engagée, sans contact direct, autour dudit plot de façade (3),
**caractérisé en ce que** :
- le plot de façade (3) est en matériau polymère composite apte à assurer la fixation du système vitré sur la surface porteuse comprenant un polymère de base et une teneur en charges organiques, inorganiques ou leur mélange comprise entre 0% et 65% en poids, par rapport au poids total du matériau polymère, le matériau polymère composite présentant une résistance à la traction d'au moins 95 MPa selon la norme ISO 527-2/1B/50, à 23°C, un module de Young de valeur d'au moins 3,5 GPa selon la norme ISO 527 et un coefficient de conductivité thermique linéaire d'au plus 0,5 W/m.K,
et **en ce que**
- la bague d'étanchéité (14) est au moins partiellement recouverte sur sa surface d'une mince couche métallique (14a).

2. Dispositif de fixation selon la revendication 1, dans lequel le matériau polymère de base est choisi dans le groupe constitué par les matériaux thermoplastiques semi-cristallins de type polyarylamide et les poly(éther)ₙ(cétones)ₘ (PEK).

3. Dispositif de fixation selon la revendication 2, dans lequel les matériaux PEK sont les polyétheréthercétone (PEEK), les polyétheréthercétonecétone (PEKK) ou les polyéthercétoneéthercétonecétones (PEKEKK).

4. Dispositif de fixation selon l'une des revendications précédentes, dans lequel le matériau polymère composite comprend de 10% à 65% en poids, préférentiellement entre 20% et 65% en poids, très avantageusement entre 30 et 60% en poids, en particulier entre et 60% en poids desdites charges, lesdites charges inorganiques représentant les fibres de verre, les fibres de carbone et les oxydes métalliques, tels que l'alumine, la silice, le dioxyde de titane ou leur mélange, les fibres de verre étant les plus préférées.

5. Dispositif de fixation selon l'une des revendications précédentes, dans lequel la bague d'étanchéité (14) est en matière polymère choisie dans le groupe constitué par le polypropylène (PP) éventuellement renforcé par des charges minérales selon des pourcentages compris entre 10 et 50%, le polyéthylène (PE), le polyéthylène téréphtalate (PET), le polyester, le silicone et les terpolymères d'éthylène-propylène (EPDM), la matière polymère représentant des résines et/ou des élastomères.

6. Dispositif de fixation selon l'une des revendications précédentes, dans lequel le métal de la couche métallique (14a) est choisi dans le groupe constitué par Al, Ti, Cu, Cr, Sn, bronze, les oxydes métalliques de ces métaux, leurs alliages ou leurs mélanges.

7. Dispositif de fixation selon l'une des revendications précédentes, dans lequel la bague d'étanchéité (14) est circulaire de section carrée ou rectangulaire, la couche métallique (14a) recouvrant la surface interne de la bague d'étanchéité (14), et au moins 10% du périmètre de la section, selon la largeur de la section, de préférence au moins 50% et tout particulièrement entre 50 et 100%, et l'épaisseur de la couche métallique (14a) étant d'au plus 0,2 mm et de façon particulièrement préférée, d'au plus 0,05 mm, la gamme 0,002 mm-0,05 mm en épaisseur étant la plus préférée.

8. Dispositif de fixation selon l'une des revendications précédentes, dans lequel l'alésage de l'élément vitré intérieur (1b) est un orifice traversant, le plot (3) de façade étant engagé par la face extérieure de l'élément vitré extérieur (1a), en contact avec l'environnement extérieur, ou un orifice non traversant, le plot (3) de façade étant fixé dans l'épaisseur de l'élément vitré extérieur (1a) par sa face intérieure.

9. Dispositif de fixation selon l'une des revendications précédentes, dans lequel le plot (3) de façade comporte le corps fileté (5) disposé, en saillie, d'une part, sur la face intérieure de l'élément vitré extérieur (1a), le plot (3) étant agencé pour recevoir un écrou (6) de serrage sur cette face, et, d'autre part, sur la face intérieure de l'élément vitré intérieur (1b) et est agencé pour recevoir un écrou (31) de serrage sur cette face, et un logement taraudé (7) apte à recevoir une extrémité filetée de la tige rigide (2) portant un contre-écrou (8) destiné à être serré contre l'extrémité du corps fileté (5), la tête élargie (9) du plot (3) de façade étant de forme conique.

10. Dispositif de fixation selon l'une des revendications précédentes, dans lequel la longueur du plot (3) de façade est comprise entre 35 et 80 mm et, en particulier, entre 35 et 75 mm, et le diamètre dudit plot (3) de façade est mesuré sur la base du diamètre de la tête élargie (9) et est d'au moins 25 mm, et en particulier compris dans la plage de valeurs allant de 25 mm à 75 mm.

11. Dispositif de fixation selon l'une des revendications précédentes, dans lequel le système à rotule comporte une tête sphérique (15) apte à être maintenue de façon rotulante dans un réceptacle de forme complémentaire, lequel est ménagé dans une pièce de fixation (16) assujettie à la structure porteuse, la pièce de fixation (16) comportant, d'une part, un orifice taraudé (17) dont le fond présente une portée sphérique (18) pour ladite tête (15), et dans lequel est vissée une vis (19) à extrémité en forme de calotte sphérique concave pour pouvoir freiner la rotation de la tête sphérique (15) de la tige (2) et, d'autre part, un corps fileté (21) apte à traverser une ouverture (24) d'une plaque de fixation (23) et à y être serré grâce à un écrou de freinage (22) engagé dans ledit corps (21).

12. Dispositif de fixation selon l'une des revendications précédentes, dans lequel on prévoit des plaques de fixation (23) reliant le système à rotule à la structure porteuse par les angles des éléments vitrés (1a, 1b), lesdites plaques (23) étant en forme de croisillons à quatre branches pour une fixation quatre par quatre ou en forme de pattes (23') pour une fixation deux par deux et présentant des orifices traversants (24,24',24") de liaison du système de fixation à la structure porteuse.

13. Dispositif de fixation selon l'une des revendications précédentes, dans lequel le système vitré est un triple vitrage constitué de l'assemblage de trois plaques vitrées, un élément vitré extérieur (1a), un élément vitré intérieur (1b) et un élément vitré intermédiaire (1c) disposé entre les deux, et enserrant, deux par deux, deux cellules de gaz (42,42'), comprenant une bague intermédiaire (4') en polymère qui est placée autour du corps (5) du plot (3) de façade et présentant un élargissement de son diamètre sur une partie de sa section et, d'autre part, une rondelle (45) en matière plastique dont l'épaisseur est choisie de manière à assurer le positionnement optimal de la bague (4) placée entre l'élément vitré intérieur (1b) et le corps fileté (5) du plot (3) de façade.

14. Utilisation d'au moins un dispositif de fixation d'un système vitré sur une structure porteuse, tel que défini selon l'une des revendications 1 à 13, le dispositif comprenant un ensemble d'éléments de fixation comportant un plot (3) de façade en un matériau polymère composite apte à assurer la fixation du système vitré sur la surface porteuse comprenant un polymère de base et une teneur en charges organiques, inorganiques ou leur mélange comprise entre 0% et 65% en poids, par rapport au poids total du matériau polymère, pour obtenir un coefficient d'échange thermique Uw de la façade vitrée d'au plus 1,4 W/m².K., et pour éviter toute condensation de la façade vitrée à des températures extérieures inférieures ou égales à -5°C, pour des humidités relatives, à l'intérieur ambiant de bâtiments, d'au plus 70%.

15. Utilisation selon la revendication 14, dans laquelle le système vitré est un double-vitrage comportant une bague d'étanchéité (14) circulaire de section carrée ou rectangulaire engagée autour du corps (5) du plot (3) de façade et enserrée entre deux éléments vitrés (1a,1b), laquelle est en matière polymère au moins partiellement recouverte sur sa surface d'une couche métallique (14a), ladite surface étant définie par la totalité de la surface interne de la bague d'étanchéité (14) et par au moins 10% du périmètre de la section, selon la largeur de la section, l'épaisseur de la couche métallique étant d'au plus 0,2 mm, pour obtenir un coefficient d'échange thermique Uw de la façade vitrée d'au plus 1,4 W/m².K et pour éviter toute condensation de la façade vitrée à des températures extérieures inférieures ou égales à -15°C, pour des humidités relatives, à l'intérieur ambiant de bâtiments, d'au plus 70%.

## Patentansprüche

1. Vorrichtung zur Befestigung eines verglasten Systems auf einer Trägerstruktur, wobei das System mindestens zwei verglaste Elemente umfasst, ein äußeres verglastes Element (1a) und ein inneres verglastes Element (1b), die voneinander durch eine Gaszelle (42) getrennt sind, deren Dichtigkeit durch einen peripheren Abstandshalter (40) und durch einen Dichtungsring (14) gewährleistet ist, wobei das Gas ein Edelgas, ein Gemisch von Edelgasen oder ein Gemisch von Luft und Edelgas(en) ist, in dem der Anteil an diesem(n) letztgenannten größer als 85 % ist,
wobei die Vorrichtung eine Gesamtheit von Befestigungselementen umfasst, jeweils umfassend eine starre Stange (2), von der ein Ende auf dem verglasten System nicht rollenden Klemmelementen zugeordnet ist, die umfassen:
- einen Fassadenbolzen (3), der eingerichtet ist, um das innere verglaste Element (1b) durch eine Bohrung zu durchqueren, und der eingerichtet ist, um in einer Bohrung (10) des äußeren verglasten Elements (1a) in Eingriff zu sein, wobei der Fassadenbolzen (3) nach außen einen erweiterten Kopf (9), der eingerichtet ist, um auf einem Bereich von entsprechender Form der Bohrung (10) des äußeren verglasten Elements (1a) zur Auflage zu gelangen, und einen Gewindekörper (5) umfasst, der einem Kugelgelenksystem zugeordnet ist, das eingerichtet ist, um mit der Trägerstruktur verbunden zu sein,
und
- den Dichtungsring (14) aus Polymermaterial, der eingerichtet ist, um ohne direkten Kontakt um den Fassadenbolzen (3) einzugreifen,
**dadurch gekennzeichnet, dass**
- der Fassadenbolzen (3) aus Polymerverbundmaterial, das geeignet ist, die Befestigung des verglasten Systems auf der Trägerfläche zu gewährleisten, umfassend ein Basispolymer und einen Gehalt an organischen, anorganischen Füllstoffen oder ihrem Gemisch zwischen 0 und 65 Gew.-% bezogen auf das Gesamtgewicht des Polymermaterials, wobei das Polymerverbundmaterial eine Zugfestigkeit von mindestens 95 MPa nach der Norm ISO 527-2/1B/50 bei 23 °C, ein Young-Modul mit einem Wert von mindestens 3,5 GPa nach der Norm ISO 527 und einen linearen Wärmeleitkoeffizienten von höchstens 0,5 W/m.K aufweist,
und dass
- der Dichtungsring (14) zumindest teilweise auf seiner Oberfläche mit einer dünnen Metallschicht (14a) überzogen ist.

2. Befestigungsvorrichtung nach Anspruch 1, bei der das Polymerbasismaterial in der Gruppe ausgewählt ist, die von den semikristallinen thermoplastischen Materialien vom Typ Polyarylamid und den Poly(ether)n(ketonen)m (PKK) gebildet ist.

3. Befestigungsvorrichtung nach Anspruch 2, bei der die PEK-Materialien die Polyetheretherketone (PEEK), die Polyetheretherketonketone (PEKK) oder die Polyetherketonetherketonketone (PEIEKK) sind.

4. Befestigungsvorrichtung nach einem der vorhergehenden Ansprüche, bei der das Polymerverbundmaterial 10 bis 65 Gew.-%, vorzugsweise zwischen 20 und 65 Gew.-%, sehr vorteilhafterweise zwischen 30 und 60 Gew.-%, insbesondere zwischen 0 und 60 Gew.-% der Füllstoffe umfasst, wobei die anorganischen Füllstoffe die Glasfasern, die Kohlefasern und die Metalloxide, wie Aluminiumoxid, Siliziumoxid, Titandioxid oder ihr Gemisch darstellen, wobei die Glasfasern am meisten bevorzugt werden.

5. Befestigungsvorrichtung nach einem der vorhergehenden Ansprüche, bei der der Dichtungsring (14) aus Polymermaterial ist, das in der Gruppe ausgewählt ist, umfassend Polypropylen (PP), eventuell verstärkt durch mineralische Füllstoffe in Prozentsätzen zwischen 10 und 50 %, Polyethylen (PE), Polyethylenterephthalat (PET), Polyester, Silikon und die Ethylen-Propylen-Terpolymere (EPDM), wobei das Polymermaterial Harze und/oder Elastomere darstellt.

6. Befestigungsvorrichtung nach einem der vorhergehenden Ansprüche, bei der das Metall der metallischen Schicht (14a) in der Gruppe ausgewählt ist, umfassend Al, Ti, Cu, Cr, Sn, Bronze, die Metalloxide dieser Metalle, ihre Legierungen oder ihre Gemische.

7. Befestigungsvorrichtung nach einem der vorhergehenden Ansprüche, bei der der Dichtungsring (14) kreisförmig mit einem quadratischen oder rechteckigen Querschnitt ist, wobei die metallische Schicht (14a) die Innenfläche des Dichtungsringes (14) bedeckt, und mindestens 10 % des Umfangs des Querschnitts, je nach Breite des Querschnitts, vorzugsweise mindestens 50 % und besonders bevorzugt zwischen 50 und 100 % und die Dicke der metallischen Schicht (14a) höchstens 0,2 mm und auf besonders bevorzugte Weise höchstens 0,05 mm sind, wobei der Bereich 0,002 mm -0,05 mm in der Dicke der am meisten bevorzugte ist.

8. Befestigungsvorrichtung nach einem der vorhergehenden Ansprüche, bei der die Bohrung des inneren verglasten Elements (1b) eine durchgehende Öffnung ist, wobei der Fassadenbolzen (3) mit der Außenseite des äußeren verglasten Elements (1a) in Kontakt mit der äußeren Umgebung in Eingriff ist, oder eine nicht durchgehende Öffnung ist, wobei der Fassadenbolzen (3) in der Dicke des äußeren verglasten Elements (1a) über seine Innenseite befestigt ist.

9. Befestigungsvorrichtung nach einem der vorhergehenden Ansprüche, bei der der Fassadenbolzen (3) den Gewindekörper (5) umfasst, der einerseits auf der Innenseite des äußeren verglasten Elements (1a) herausragend angeordnet ist, wobei der Bolzen (3) dazu vorgesehen ist, eine Spannmutter (6) auf dieser Fläche aufzunehmen, und andererseits auf der Innenseite des inneren verglasten Elements (1b) herausragend angeordnet und dazu vorgesehen ist, eine Spannmutter (31) auf dieser Seite aufzunehmen, und eine Gewindeaufnahme (7) umfasst, die geeignet ist ein Gewindeende der starren Stange (2) aufzunehmen, das eine Gegenmutter (8) umfasst, die dazu bestimmt ist, gegen das Ende des Gewindekörpers (5) gespannt zu werden, wobei der erweiterte Kopf (9) des Fassadenbolzens (3) von konischer Form ist.

10. Befestigungsvorrichtung nach einem der vorhergehenden Ansprüche, bei der die Länge des Fassadenbolzens (3) zwischen 35 und 80 mm und insbesondere zwischen 35 und 75 mm beträgt, und der Durchmesser des Fassadenbolzens (3) auf Basis des Durchmessers des erweiterten Kopfes (9) gemessen wird und mindestens 25 mm beträgt und insbesondere in dem Bereich von 25 mm bis 75 mm liegt.

11. Befestigungsvorrichtung nach einem der vorhergehenden Ansprüche, bei dem das Kugelgelenksystem einen kugelförmigen Kopf (15) umfasst, der geeignet ist, rollend in einem Behältnis von komplementärer Form gehalten zu werden, der in einem Befestigungsstück (16) vorgesehen ist, das der Trägerstruktur unterworfen ist, wobei das Befestigungsstück (16) einerseits eine Gewindeöffnung (17), deren Boden einen kugelförmigen Bereich (18) für den Kopf (15) aufweist und in die eine Schraube (19) mit einem Ende in Form einer konkaven Kugelhaube geschraubt ist, um die Rotation des Kugelkopfes (15) der Stange (2) bremsen zu können, und andererseits einen Gewindekörper (21) umfasst, der geeignet ist, durch eine Öffnung (24) einer Befestigungsplatte (23) hindurchzugehen und hier durch eine Bremsmutter (22), die im Körper (21) in Eingriff ist, festgeklemmt zu werden.

12. Befestigungsvorrichtung nach einem der vorhergehenden Ansprüche, bei der Befestigungsplatten (23) vorgesehen sind, die das Kugelgelenksystem mit der Trägerstruktur durch die Winkel der verglasten Elemente (1a, 1b) verbindet, wobei die Platten (23) in Form von Kreuzstücken mit vier Schenkeln für eine Befestigung vier und vier oder in Form von Klauen (23') für eine Befestigung zwei und zwei sind und durchgehende Öffnungen (24, 24', 24") zur Verbindung des Befestigungssystems mit der Trägerstruktur aufweisen.

13. Befestigungsvorrichtung nach einem der vorhergehenden Ansprüche, bei der das verglaste System eine Dreifachverglasung ist, die aus der Zusammenfügung von drei verglasten Platten gebildet ist, einem äußeren verglasten Element (1a), einem inneren verglasten Elemente (1b) und einem verglasten Zwischenelement (1c), das zwischen den beiden angeordnet ist, die zwei und zwei zwei Gaszellen (42, 42') einspannen, umfassend einen Zwischenring (4') aus Polymer, der um den Körper (5) des Fassadenbolzens (3) angeordnet ist und eine Erweiterung seines Durchmessers auf einem Teil seines Querschnitts aufweist, und andererseits eine Scheibe (45) aus Kunststoff, deren Dicke derart gewählt ist, dass die optimale Positionierung des Ringes (4), der zwischen dem inneren verglasten Element (1b) und dem Gewindekörper (5) des Fassadenbolzens (3) angeordnet ist, gewährleistet ist.

14. Verwendung mindestens einer Vorrichtung zur Befestigung eines verglasten Systems auf einer Trägerstruktur, wie nach einem der Ansprüche 1 bis 13 definiert, wobei die Vorrichtung eine Gesamtheit von Befestigungselementen umfasst, umfassend einen Fassadenbolzen (3) aus einem Polymerverbundmaterial, das geeignet ist, die Befestigung des verglasten Systems auf der Trägerfläche zu gewährleisten, umfassend ein Basispolymer und einen Gehalt an organischen, anorganischen Füllstoffen oder ihrem Gemisch zwischen 0 und 65 Gew.-% bezogen auf das Gesamtgewicht des Polymermaterials, um einen Wärmeaustauschkoeffizienten Uw der verglasten Fläche von höchstens 1,4 Wjm².K zu erhalten, und um jede Kondensation der verglasten Fassade bei Außentemperaturen unter oder gleich -5 °C bei relativen Feuchtigkeiten im Innenraum von Gebäuden von höchstens 70 % zu vermeiden.

15. Verwendung nach Anspruch 14, bei der das verglaste System eine Zweifachverglasung ist, umfassend einen kreisförmigen Dichtungsring (14) mit quadratischem oder rechteckigem Querschnitt, der um den Körper (5) des Fassadenbolzens (3) in Eingriff ist und zwischen zwei verglasten Elementen (1a, 1b) eingespannt ist, der aus Polymermaterial ist, das teilweise auf seiner Oberfläche mit einer metallischen Schicht (14a) überzogen ist, wobei die Oberfläche durch die Gesamtheit der Innenfläche des Dichtungsringes (14) und durch mindestens 10 % des Umfangs des Querschnitts entlang der Breite des Querschnitts definiert ist, wobei die Dicke der metallischen Schicht höchstens 0,2 mm ist, um einen Wärmeaustauschkoeffizienten Uw der verglasten Fassade von höchstens 1,4 W/m².K zu erhalten, und um jede Kondensation der verglasten Fassade bei Außentemperaturen unter oder gleich -15 °C für relative Feuchtigkeiten im Innenraum von Gebäuden von höchstens 70 % zu vermeiden.

## Claims

1. Device for fastening a glazed system to a load-bearing structure, said system comprising at least two glazed elements, an outer glazed element (1a) and an inner glazed element (1b), separated from one another by a gas cell (42), the tightness of which is ensured by a peripheral spacer (40) and by a tightness ring (14), the gas being a noble gas, a mixture of noble gases or mixture of air and noble gas(es) in which the proportion of the latter is greater than 85%,
said device comprising a set of fastening elements, each comprising a rigid rod (2) one end of which is associated with non-swivelling means of clamping onto the glazed system, which comprise:
- a facade block (3) configured to pass right through the inner glazed element (1b) through a bore and configured to be engaged in a bore (10) of the outer glazed element (1a), said facade block (3) comprising, towards the outside, a widened head (9) configured to bear against a correspondingly shaped bearing surface of said bore (10) of the outer glazed element (1a), and a threaded body (5) associated with a swivel joint system which is configured to be connected to the load-bearing structure,
and
- said tightness ring (14), made of polymer material, configured to be engaged, without direct contact, around said facade block (3),
**characterized in that**:
- the facade block (3) is made of a composite polymer material capable of fastening the glazed system to the bearing surface comprising a base polymer and a content of organic fillers, inorganic fillers or a mixture thereof of between 0% and 65% by weight, relative to the total weight of the polymer material, the composite polymer material having a tensile strength of at least 95 MPa in accordance with the standard ISO 527-2/1B/50, at 23°C, a Young's modulus having a value of at least 3.5 GPa in accordance with the standard ISO 527 and a linear thermal conductivity coefficient of at most 0.5 W/m.K,
and **in that**
- the tightness ring (14) is at least partially covered on its surface with a metallic thin layer (14a).

2. Fastening device according to Claim 1, in which the base polymer material is selected from the group consisting of semicrystalline thermoplastic materials of polyarylamide type and poly(ether)n(ketones)m (PEK).

3. Fastening device according to Claim 2, in which the PEK materials are polyetheretherketones (PEEK), polyetheretherketoneketones (PEKK) or polyetherketoneetherketoneketones (PEKEKK).

4. Fastening device according to one of the preceding claims, in which the composite polymer material comprises from 10% to 65% by weight, preferentially between 20% and 65% by weight, very advantageously between 30% and 60% by weight, in particular between 0 and 60% by weight of said fillers, said inorganic fillers representing glass fibres, carbon fibres and metal oxides, such as alumina, silica, titanium dioxide or a mixture thereof, the glass fibres being the most preferred.

5. Fastening device according to one of the preceding claims, in which the tightness ring (14) is made of polymer material selected from the group consisting of polypropylene (PP) optionally reinforced by mineral fillers in percentages of between 10% and 50%, polyethylene (PE), polyethylene terephthalate (PET), polyester, silicone and ethylene-propylene terpolymers (EPDM), the polymer material representing resins and/or elastomers.

6. Fastening device according to one of the preceding claims, in which the metal of the metallic layer (14a) is selected from the group consisting of Al, Ti, Cu, Cr, Sn, bronze, metal oxides of these metals, alloys thereof or mixtures thereof.

7. Fastening device according to one of the preceding claims, in which the tightness ring (14) is circular with a square or rectangular cross section, the metallic layer (14a) covering the inner surface of the tightness ring (14), and at least 10% of the perimeter of the cross section, depending on the width of the cross section, preferably at least 50% and very particularly between 50% and 100%, and the thickness of the metallic layer (14a) being at most 0.2 mm and particularly preferably at most 0.05 mm, the 0.002 mm - 0.05 mm thickness range being the most preferred.

8. Fasting device according to one of the preceding claims, in which the bore of the inner glazed element (1b) is a through-hole, the facade block (3) being engaged by the outer face of the outer glazed element (1a), in contact with the outside environment, or a blind hole, the facade block (3) being fastened in the thickness of the outer glazed element (1a) via its inner face.

9. Fastening device according to one of the preceding claims, in which the facade block (3) comprises the threaded body (5) positioned, jutting out, on the one hand, on the inner face of the outer glazed element (1a), the block (3) being arranged to receive a clamping nut (6) on this face, and, on the other hand, on the inner face of the inner glazed element (1b) and is arranged to receive a clamping nut (31) on this face, and a tapped housing (7) capable of receiving a threaded end of the rigid rod (2) bearing a locknut (8) intended to be clamped against the end of the threaded body (5), the widened head (9) of the facade block (3) being of conical shape.

10. Fastening device according to one of the preceding claims, in which the length of the facade block (3) is between 35 and 80 mm and, in particular, between 35 and 75 mm, and the diameter of said facade block (3) is measured on the basis of the diameter of the widened head (9) and is at least 25 mm, and in particular within the range of values extending from 25 mm to 75 mm.

11. Fastening device according to one of the preceding claims, in which the swivel joint system comprises a spherical head (15) capable of being held in a swivelling manner in a receptacle of complementary shape, which is made in a fastening part (16) affixed to the load-bearing structure, the fastening part (16) comprising, on the one hand, a tapped hole (17) the bottom of which has a spherical bearing surface (18) for said head (15), and screwed into which is a screw (19) with a concave spherical dome-shaped end in order to be able to brake the rotation of the spherical head (15) of the rod (2) and, on the hand, a threaded body (21) capable of passing through an opening (24) of a fastening plate (23) and of being clamped thereto by means of a brake nut (22) engaged in said body (21).

12. Fastening device according to one of the preceding claims, in which fastening plates (23) are provided that connect the swivel joint system to the load-bearing structure via the corners of the glazed elements (1a, 1b), said plates (23) being in the form of cross braces with four arms for a four-by-four fastening or in the form of lugs (23') for a two-by-two fastening and having through-holes (24, 24', 24") for connecting the fastening system to the load-bearing structure.

13. Fastening device according to one of the preceding claims, in which the glazed system is a triple glazing formed of the assembly of three glazed plates, an outer glazed element (1a), an inner glazed element (1b) and an intermediate glazed element (1c) positioned between the two, and enclosing, in pairs, two gas cells (42, 42'), comprising an intermediate polymer ring (4') which is placed around the body (5) of the facade block (3) and that has a widening of its diameter over a portion of its cross section and, on the other hand, a plastic washer (45) the thickness of which is chosen so as to ensure the optimal positioning of the ring (4) placed between the inner glazed element (1b) and the threaded body (5) of the facade block (3).

14. Use of at least one device for fastening a glazed system to a load-bearing structure, as defined according to one of Claims 1 to 13, the device comprising a set of fastening elements comprising a facade block (3) made of a composite polymer material capable of fastening the glazed system to the bearing surface comprising a base polymer and a content of organic fillers, inorganic fillers or a mixture thereof of between 0% and 65% by weight, relative to the total weight of the polymer material, in order to obtain a heat transfer coefficient Uw of the glazed facade of at most 1.4 W/m2.K, and in order to prevent any condensation of the glazed facade at outside temperatures of less than or equal to -5°C, for relative humidities, in the ambient interior of buildings, of at most 70%.

15. Use according to Claim 14, in which the glazed system is a double glazing comprising a circular tightness ring (14) with a square or rectangular cross section engaged around the body (5) of the facade block (3) and clamped between two glazed elements (1a, 1b), which ring is made of a polymer material at least partially covered on its surface with a metallic layer (14a), said surface being defined by the whole of the inner surface of the tightness ring (14) and by at least 10% of the perimeter of the cross section, depending on the width of the cross section, the thickness of the metallic layer being at most 0.2mm, in order to obtain a heat transfer coefficient Uw of the glazed facade of at most 1.4 W/m2.K and in order to prevent any condensation of the glazed facade at outside temperatures of less than or equal to -15oC, for relative humidities, in the ambient interior of buildings, of at most 70%.
